# FASCICULE DE BREVET EUROPEEN

(11) **EP 3 157 886 B1**
(45) Date de publication et mention de la délivrance du brevet: **03.04.2019**
(21) Numéro de dépôt: 15728908.3
(22) Date de dépôt: 18.06.2015
(51) Int. Cl.: C04B 28/04, C04B 7/52

(54) **BETONS A ULTRA HAUTE PERFORMANCE A FAIBLE TENEUR EN CIMENT**
HOCHLEISTUNGSBETONS MIT NIEDRIGEM ZEMENTGEHALT
ULTRA-HIGH PERFORMANCE CONCRETES HAVING A LOW CEMENT CONTENT

(30) Priorité: 20.06.2014 FR 1455728
(43) Date de publication de la demande: 26.04.2017
(73) Titulaire: Holcim Technology Ltd, 8645 Jona (CH)
(72) Inventeur: TOUSSAINT, Fabrice, F-38291 Saint Quentin Fallavier (FR); MOLINES, Gérard, F-38291 Saint Quentin Fallavier (FR); BARBARULO,Rémi, F-38291 Saint Quentin Fallavier (FR)
(74) Mandataire: Regimbeau
(86) Numéro de dépôt international: PCT/EP2015/063684
(87) Numéro de publication internationale: WO 2015/193420

(56) Documents cités:
- EP-A1- 0 518 777
- EP-A1- 0 934 915
- EP-A1- 2 275 390
- WO-A1-2009/111295
- WO-A1-2010/109095
- WO-A1-2013/059339
- FR-A1- 2 837 819
- US-A- 5 735 947
- US-A1- 2012 012 034
- ROUGREAU P ET AL: "UHPC with ultrafine particles other than silica fume", PROCEEDINGS OF THE INTERNATIONAL SYMPOSIUM ON ULTRA HIGH PERFORMANCE CONCRETE, UNIV. PRESS, DE, 1 janvier 2004 (2004-01-01), pages 213-225, XP008112203, ISBN: 978-3-89958-086-0
- Syed Ali Rizwan ET AL: "Understanding The Powdered Silica Fumes", International Conference on Advanced Concrete Technology and Its Applications (ACTA-2012), Islamabad, Pakistan, November 6-7, 2012, 6 November 2012 (2012-11-06), pages 53-64, XP055437479, Pakistan Retrieved from the Internet: URL:https://www.researchgate.net/profile/S yed_Rizwan2/publication/274079500_Understa nding_The_Powdered_Silica_Fumes/links/5515 4eb90cf2b5d6a0e98c43/Understanding-The-Pow dered-Silica-Fumes.pdf [retrieved on 2017-12-21]

## Description

L'invention concerne les liants hydrauliques qui permettent d'obtenir un béton à ultra haute performance et à faible teneur en ciment, ainsi et des mélanges comprenant ce liant.

Les développements technologiques des dernières années dans le domaine des bétons ont conduit à la mise au point de liants hydrauliques permettant d'obtenir des bétons à ultra haute performance en terme notamment de résistance à la compression. Ces liants impliquent généralement le recours à des matériaux supplémentaires en plus du ciment et des granulats, qui sont par exemple des fibres, des adjuvants organiques ou des particules dites ultrafines.

Cependant ces bétons classiques à ultra haute performance ont une teneur relativement élevée en ciment, généralement de 700 kg de ciment /m³ de béton à 1000 kg de ciment /m³ de béton.

Les documents EP 934 915 A1, EP 2 275 390 A1 et WO2010/109095 A1 divulguent des bétons très haute performance. Dans le document EP 934 915 A1 les particules de ciment présentent un D50 d'environ 14 µm. Le document EP 2 275 390 A1 utilise un ciment CEM I standard.

Le document WO2010/109095 décrit une composition à faible teneur en ciment Portland, ne comprenant pas de fumée de silice.

Or la fabrication du ciment, en particulier la fabrication du clinker est à l'origine de fortes émissions de dioxyde de carbone. En effet, la production de clinker suppose :
a) le préchauffage et la décarbonatation de la farine crue qui est obtenue par broyage des matières premières, que sont notamment le calcaire et l'argile ; et
b) la cuisson de la farine décarbonatée à une température d'environ 1450°C, suivie par un brusque refroidissement.

Ces deux étapes sont productrices de CO₂, d'une part en tant que produit direct de la décarbonatation et d'autre part en tant que produit secondaire de la combustion qui est mise en oeuvre à l'étape de cuisson pour fournir l'élévation en température.

Or les fortes émissions de dioxyde de carbone dans les procédés classiques de production de compositions cimentaires et de béton constituent un problème environnemental majeur, et, dans le contexte actuel, sont amenées à être fortement pénalisées sur le plan économique.

Il existe donc un fort besoin d'un procédé permettant de produire du béton à ultra haute performance avec des émissions associées de dioxyde de carbone réduites.

Dans ce but, la présente invention propose un liant hydraulique comprenant en pourcentage en masse :
- de 17 à 55 % d'un ciment Portland dont les particules présentent un D50 compris de 2 µm à 11 µm ;
- au moins 5% de fumée de silice ;
- de 36 à 70% d'une addition minérale A1 dont les particules présentent un D50 compris de 15 à 150 µm ;
la somme de ces pourcentages étant comprise de 80 à 100% ;
la somme des pourcentages de ciment et de fumée de silice étant supérieure à 28% ;
l'addition minérale A1 étant choisie parmi les laitiers, les additions pouzzolaniques ou les additions siliceuses tel que le quartz, les additions minérales silico-calcaire, les additions calcaire telles que le carbonate de calcium ou leurs mélanges.

La présente invention a également pour objet un mélange comprenant en pourcentage en volume, au moins 45 % du liant hydraulique selon l'invention et au moins 30 % de sable, la somme de ces pourcentages étant comprise de 95 à 100%.

La présente invention a également pour objet une composition hydraulique comprenant dans un volume de 1 m³ hors air occlus et hors fibres
- de 155 à 205 litres d'eau;
- au moins 770 litres de mélange selon l'invention;
   la somme des volumes de ces 2 composants étant comprise de 950 à 1000 litres.

L'invention propose également un objet mis en forme pour le domaine de la construction comprenant le liant hydraulique selon l'invention ou le mélange selon l'invention.

L'invention cherche à offrir au moins l'un des avantages déterminants décrits ci-après.

L'invention permet de répondre au besoin de réduction des émissions de CO₂. En effet la quantité de ciment (et en particulier de clinker) utilisée dans le cadre de la présente invention est inférieure à celle qui est traditionnellement nécessaire pour les bétons à ultra haute performance, jusqu'à 148 kg/m³ de ciment par de m³ béton.

Avantageusement la composition hydraulique selon l'invention a une résistance mécanique élevée, généralement supérieure ou égal à 90 MPa à 28 jours.

D'autres avantages et caractéristiques de l'invention apparaîtront clairement à la lecture de la description et des exemples donnés à titre purement illustratifs et non limitatifs qui vont suivre.

L'invention a pour objet un liant hydraulique comprenant en pourcentage en masse :
- de 17 à 55 % d'un ciment Portland dont les particules présentent un D50 compris de 2 µm à 11 µm ;
- au moins 5% de fumée de silice ;
- de 36 à 70% d'une addition minérale A1 dont les particules présentent un D50 compris de 15 à 150 µm ;
la somme de ces pourcentages étant comprise de 80 à 100% ;
la somme des pourcentages de ciment et de fumée de silice étant supérieure à 28% ;
l'addition minérale A1 étant choisie parmi les laitiers, les additions pouzzolaniques ou les additions siliceuses tel que le quartz, les additions minérales silico-calcaire, les additions calcaire telles que le carbonate de calcium ou leurs mélanges.

Un liant hydraulique est un matériau qui prend et durcit par hydratation.

La prise est généralement le passage à l'état solide d'un liant hydraulique par réaction d'hydratation. La prise est généralement suivie par une période de durcissement.

Le durcissement est généralement l'acquisition des résistances mécaniques d'un liant hydraulique. Le durcissement a généralement lieu après la fin de la prise.

Le liant hydraulique selon l'invention comprend un ciment Portland. Le ciment Portland au sens de l'invention incorpore un clinker Portland. Il peut également être envisagé d'utiliser un clinker Portland broyé à titre de ciment Portland, à condition d'ajouter en outre du sulfate de calcium.

Les ciments Portland préférés sont ceux tels que définis dans la norme européenne NF EN 197-1 d'avril 2012 et ceux décrit dans la norme ASTM C150-12, plus préférentiellement ce sont les ciments CEM I.

De préférence, le liant hydraulique selon l'invention comprend de 17 à 50% de ciment Portland, plus préférentiellement de 18 à 45%, exprimé en pourcentage en masse par rapport au liant.

Les ciments convenant pour être utilisés selon la présente invention sont généralement les ciments Portland dont la surface BET est comprise de 1,20 à 3 m²/g, de préférence de comprise de 1,20 à 2,5 m²/g.

La surface spécifique BET est une mesure de la surface réelle totale des particules, qui tient compte de la présence de reliefs, d'irrégularités, de cavités superficielles ou internes, de porosité.

Les ciments convenant pour être utilisés selon la présente invention sont de préférence les ciments dont les particules présentent un D10 compris de 1 µm à 4 µm, plus préférentiellement de 1 µm à 3 µm, encore plus préférentiellement de 1 µm à 2,5 µm.

Les ciments convenant pour être utilisés selon la présente invention sont de préférence les ciments dont les particules présentent un D50 compris de 3 µm à 10 µm, plus préférentiellement de 4 µm à 9 µm.

Les ciments convenant pour être utilisés selon la présente invention sont de préférence les ciments dont les particules présentent un D90 compris de 8 µm à 25 µm, plus préférentiellement 9 µm à 24 µm.

Le D90, également noté D_{V}90, correspond au 90^{ème} centile de la distribution en volume de taille des particules, c'est-à-dire que 90 % du volume est constitué de particules dont la taille est inférieure au D90 et 10 % de taille supérieure au D90.

De même, le D50, également noté D_{V}50, correspond au 50^{ème} centile de la distribution en volume de taille des particules, c'est-à-dire que 50 % du volume est constitué de particules dont la taille est inférieure au D50 et 50 % de taille supérieure au D50.

De même, le D10, également noté D_{V}10, correspond au 10^{ème} centile de la distribution en volume de taille des particules, c'est-à-dire que 10 % du volume est constitué de particules dont la taille est inférieure au D10 et 90 % de taille supérieure au D10.

Le D10 ou le D90 d'un ensemble de particules peut être généralement déterminé par granulométrie laser pour les particules de taille inférieure à 800 µm, ou par tamisage pour les particules de taille supérieure à 63 µm.

De préférence, le ciment Portland convenant pour être utilisé selon la présente invention a une surface spécifique Blaine supérieure ou égale à 5000 cm²/g, plus préférentiellement supérieure ou égale à 6500 cm²/g.

Le ciment Portland pouvant être utilisé selon la présente invention peut être broyé et/ou séparé (par un séparateur dynamique) afin d'obtenir un ciment ayant une surface spécifique Blaine supérieure ou égale à 5000 cm²/g. Ce ciment peut être qualifié d'ultrafin. Le ciment peut par exemple être broyé selon 2 méthodes.

Selon une première méthode, le ciment ou le clinker peut être broyé jusqu'à une surface spécifique Blaine de 5000 à 9000 cm²/g. Un séparateur de haute efficacité, de deuxième génération ou de troisième génération, ou un séparateur de très haute efficacité, peut être utilisé dans cette première étape pour séparer le ciment ayant la finesse désirée et écarter le ciment n'ayant pas la finesse désirée. Ce ciment est alors renvoyé dans le broyeur.

Selon une deuxième méthode, un ciment Portland peut passer dans un séparateur de très haute efficacité, dit THF (très haute finesse), afin de séparer les particules de ciment ayant une surface spécifique Blaine supérieure ou égale à la finesse cible (la finesse cible étant supérieure à 5000 cm²/g) et les particules de ciment ayant une surface spécifique Blaine inférieure à la finesse cible. Les particules de ciment ayant une surface spécifique Blaine supérieure ou égale à la finesse cible peuvent être utilisées telles quelles. Les particules de ciment ayant une surface spécifique Blaine inférieure à la finesse cible peuvent être écartées ou broyées séparément jusqu'à l'obtention de la surface spécifique Blaine souhaitée. Les broyeurs qui peuvent être utilisés dans les deux méthodes sont par exemple un broyeur à boulets, un broyeur vertical, une presse à rouleaux, un broyeur horizontal (par exemple de type Horomill©) ou un broyeur vertical agité (par exemple de type Tower Mill).

Le liant hydraulique selon l'invention comprend de la fumée de silice.

La fumée de silice convenant selon l'invention peut être un sous-produit de la métallurgie et de la production de silicium. La fumée de silice est généralement formée de particules sphériques comprenant au moins 85% en masse de silice amorphe.

De préférence, la fumée de silice utilisée selon la présente invention peut être choisie parmi les fumées de silice selon la norme Européenne NF EN 197-1 de février 2001 paragraphe 5.2.7.

De préférence, le liant hydraulique selon l'invention comprend de 5 à 45% de fumée de silice, plus préférentiellement de 5 à 40%, encore plus préférentiellement de 6 à 30%, exprimé en pourcentage en masse par rapport au liant.

Le liant hydraulique selon l'invention comprend une addition minérale A1 choisie parmi les laitiers, les additions pouzzolaniques ou les additions siliceuses tel que le quartz, les additions minérales silico-calcaire, les additions calcaire telles que le carbonate de calcium ou leurs mélanges.

Les additions minérales A1 convenant également selon l'invention peuvent être choisies parmi des laitiers, éventuellement broyés, des schistes calcinés, des matériaux contenant du carbonate de calcium, des cendres volantes, des zéolithes, les cendres issues de la combustion de végétaux, les argiles calcinées et leurs mélanges.

De préférence, les additions minérales A1 convenant selon l'invention peuvent être des fines de silices et/ou de carbonate de calcium.

Les additions minérales A1 sont, par exemple des schistes calcinés (par exemple tels que définis dans la norme NF EN 197-1, paragraphe 5.2.5), des additions minérales comprenant du carbonate de calcium, par exemple du calcaire (par exemple tel que défini dans la norme NF EN 197-1, paragraphe 5.2.6), des additions minérales comprenant de la silice, par exemple des fines siliceuses ou leurs mélanges.

De préférence, le liant hydraulique selon l'invention comprend de 36 à 68%, de l'addition A1, plus préférentiellement de 36 à 66%, exprimé en pourcentage en masse par rapport au liant.

Le liant hydraulique selon l'invention peut comprendre en outre du sulfate de calcium.

De préférence, le liant hydraulique selon l'invention comprend en outre de 0,01 à 8 % de sulfate de calcium, exprimé en pourcentage en masse par rapport au liant.

Le sulfate de calcium existe à l'état naturel. Il est également possible d'utiliser un sulfate de calcium qui est un sous-produit de certains procédés industriels. Le sulfate de calcium peut être anhydre ou pas.

De préférence, lorsque la finesse du ciment augmente, il est possible d'augmenter également la quantité de sulfate de calcium pour obtenir des résistances mécaniques optimales. L'homme du métier saura de par ses connaissances optimiser la quantité de sulfate de calcium en utilisant des méthodes connues. Cette optimisation se fera en fonction de la finesse des particules de ciment.

Le liant hydraulique selon l'invention peut comprendre en outre de 0 à 20 %, exprimé en pourcentage en masse par rapport au liant, de matériaux pouzzolaniques (par exemple tels que définis dans la norme Européenne NF EN 197-1 de février 2001 paragraphe 5.2.3), de laitiers (par exemple tels que définis dans la norme Européenne NF EN 197-1 de février 2001 paragraphe 5.2.2), de schistes calcinés (par exemple tels que définis dans la norme Européenne NF EN 197-1 de février 2001 paragraphe 5.2.5), de matériaux contenant du carbonate de calcium, par exemple du calcaire (par exemple tel que défini dans la norme Européenne NF EN 197-1 de février 2001 paragraphe 5.2.6), de additions siliceuses (par exemple telles que définies dans la norme française NF P 18-509 de décembre 1998 paragraphe 5), de cendres volantes (par exemple tels que définis dans la norme Européenne NF EN 197-1 de février 2001 paragraphe 5.2.4) ou leurs mélanges.

L'invention a également pour autre objet un mélange comprenant en pourcentage en volume, au moins 45 % du liant hydraulique selon l'invention et au moins 30 % de sable, la somme de ces pourcentages étant comprise de 95 à 100%.

Le mélange selon l'invention comprend un sable.

De préférence, le sable du mélange selon l'invention est un sable siliceux, un sable de bauxite calcinée, un sable silico-calcaire, un sable calcaire ou leurs mélanges.

La granulométrie des sables est généralement déterminée par tamisage.

De préférence, le mélange selon l'invention comprend un sable dont les particules présentent un D10 compris de 100 µm à 1 mm.

De préférence, le mélange selon l'invention comprend un sable dont les particules présentent un D50 compris de 200 à 3 mm, plus préférentiellement compris de 250 à 1 000 µm.

De préférence, le mélange selon l'invention comprend un sable dont les particules présentent un D90 inférieur ou égal à 5 mm, plus préférentiellement un D90 compris de 300 µm à 5 mm, encore plus préférentiellement un D90 compris de 350 µm à 1 000 µm.

De préférence, le mélange selon l'invention comprend un sable dont les particules présentent un D10 compris de 100 µm à 1 mm et un D50 compris de 200 µm à 3 mm et un D90 de 300 µm à 5 mm.

L'invention a également pour autre objet une composition hydraulique comprenant dans un volume de 1 m³ hors air occlus et hors fibres
- de 155 à 205 litres d'eau;
- au moins 770 litres de mélange selon l'invention;
   la somme des volumes de ces 2 composants étant comprise de 950 à 1000 litres.

En générale, l'eau comprend l'eau ajoutée pour le gâchage et l'eau des adjuvants, appelée aussi eau totale.

La composition hydraulique selon l'invention inclut à la fois les compositions à l'état frais et à l'état durci, par exemple un coulis de ciment, un mortier ou un béton.

La composition hydraulique selon l'invention peut également comprendre un adjuvant, par exemple un de ceux décrits dans les normes EN 934-2 de septembre 2002, EN 934-3 de novembre 2009 ou EN 934-4 d'août 2009, et éventuellement des additions minérales.

De préférence, les compositions hydrauliques selon l'invention comprennent également un adjuvant pour composition hydraulique, par exemple un accélérateur, un agent viscosant, un agent antimousse, un retardateur, un inertant des argiles, un agent réducteur de retrait, un plastifiant et/ou un superplastifiant. En particulier, il est utile d'inclure un superplastifiant de type polycarboxylate, en particulier de 0,01 à 5 %, de préférence de 0,1 à 3 %, pourcentage exprimé en masse d'extrait sec, par rapport à la masse de ciment.

Il est à noter que ces adjuvants peuvent être ajoutés au liant ou au mélange selon l'invention.

La composition hydraulique selon l'invention peut comprendre en outre un agent fluidifiant ou un superplastifiant.

Le terme "superplastifiant" tel qu'utilisé dans la présente description et les revendications qui l'accompagnent est à comprendre comme incluant à la fois les réducteurs d'eau et les superplastifiants tels que décrits dans le livre intitulé « Concrete Admixtures Handbook, Properties Science and Technology », V.S. Ramachandran, Noyes Publications, 1984.

Un réducteur d'eau est défini comme un adjuvant qui réduit de typiquement 10 à 15 % la quantité d'eau de gâchage d'un béton pour une ouvrabilité donnée. Les réducteurs d'eau incluent, par exemple les lignosulfonates, les acides hydroxycarboxyliques, les glucides et d'autres composés organiques spécialisés, par exemple le glycérol, l'alcool polyvinylique, l'alumino-méthyl-siliconate de sodium, l'acide sulfanilique et la caséine.

Les superplastifiants appartiennent à une nouvelle classe de réducteurs d'eau, chimiquement différents des réducteurs d'eau normaux et capables de réduire les quantités d'eau d'environ 30 %. Les superplastifiants ont été globalement classés en quatre groupes : les condensats sulfonés de naphtalène formaldéhyde (SNF) (généralement un sel de sodium) ; les condensats sulfonés de mélamine formaldéhyde (SMF) ; les lignosulfonates modifiés (MLS) ; et les autres. Des superplastifiants plus récents incluent des composés polycarboxyliques comme les polycarboxylates, par exemple les polyacrylates. Un superplastifiant est de préférence un superplastifiant nouvelle génération, par exemple un copolymère contenant un polyéthylène glycol comme chaîne greffée et des fonctions carboxyliques dans la chaîne principale comme un éther polycarboxylique. Les polycarboxylates-polysulfonates de sodium et les polyacrylates de sodium peuvent aussi être utilisés. Les dérivés d'acide phosphonique peuvent aussi être utilisés. La quantité nécessaire de superplastifiant dépend généralement de la réactivité du ciment. Plus la réactivité est faible, plus la quantité nécessaire de superplastifiant est faible. Pour réduire la quantité totale de sels alcalins, le superplastifiant peut être utilisé sous forme de sel de calcium plutôt que sous forme de sel de sodium.

Des dérivés d'acides phosphoniques peuvent également être utilisés. Des polycarboxylate-polysulfonates de sodium et des polyacrylates de sodium peuvent également être utilisés. La quantité de superplastifiant requise dépend en général de la réactivité du ciment. Plus la réactivité est faible, plus la quantité de superplastifiant nécessaire est faible. Afin de réduire la teneur totale en sels alcalins, le superplastifiant peut être utilisé sous forme de sel de calcium plutôt que de sel de sodium.

La composition hydraulique selon l'invention peut comprendre en outre un agent anti-mousse, par exemple polydiméthylsiloxane. Les agents anti-mousses comprennent également les silicones sous forme de solution, de solide ou de préférence sous forme de résine, d'huile ou d'émulsion, de préférence dans l'eau. Plus particulièrement adaptés sont les silicones comprenant des groupements (RSiO_{0,5}) et (R₂SiO). Dans ces formules, les radicaux R, qui peuvent être identiques ou différents, sont de préférence un atome d'hydrogène ou un groupe alkyle de 1 à 8 atomes de carbone, le groupe méthyle étant préféré. Le nombre de motifs est de préférence de 30 à 120.

La composition hydraulique selon l'invention peut comprendre en outre un agent viscosant et/ou un agent de modification de la limite d'écoulement (généralement pour accroître la viscosité et/ou la limite d'écoulement). De tels agents comprennent : les dérivés de cellulose, par exemple des éthers de cellulose solubles dans l'eau, tels que les éthers de carboxyméthyl, méthyl, éthyl, hydroxyéthyl et hydroxypropyl de sodium ; les alginates ; et le xanthane, la carraghénine ou la gomme de guar. Un mélange de ces agents peut être utilisé.

La composition hydraulique selon l'invention peut comprendre en outre un accélérateur et/ou un retardateur.

La composition hydraulique selon l'invention peut comprendre en outre des fibres, par exemple des fibres minérales (par exemple verre, basalte), des fibres organiques (par exemple plastique type APV), des fibres métalliques (par exemple acier) ou un mélange de celles-ci.

Les fibres organiques peuvent notamment être choisies parmi les fibres d'alcool polyvinylique (APV), les fibres de poly-acrylonitrile (PAN), les fibres de polyethylène haute densité (PEHD), les fibres de polyamide ou polyimide, des fibres de polypropylène, les fibres d'aramide ou les fibres de carbone. Des mélanges de ces fibres peuvent également être utilisés.

Ces fibres organiques peuvent se présenter sous forme d'objet constitué soit de monobrin, soit de multibrin, le diamètre de l'objet allant de 25 microns à 800 microns. La longueur individuelle des fibres organiques est de préférence comprise entre 10 et 50 mm.

Pour ce qui est des fibres métalliques, il peut s'agir de fibres métalliques choisies parmi les fibres d'acier telles que les fibres d'acier à haute tenue mécanique, les fibres d'acier amorphe, ou encore les fibres d'acier inoxydable. Eventuellement, les fibres d'acier peuvent être revêtues d'un métal non ferreux tel que le cuivre, le zinc, le nickel (ou leurs alliages).

La longueur individuelle des fibres métalliques est de préférence d'au moins 2 mm et est, encore plus préférentiellement, comprise dans la gamme 10-30 mm.

On peut utiliser des fibres crénelées, ondulées ou crochetées aux extrémités.

De préférence, la quantité de fibres est comprise de 0,1 à 6 %, encore plus préférentiellement de 1 à 5 % du volume de la composition hydraulique.

Le recours à des mélanges de fibres de caractéristiques différentes permet d'adapter les propriétés du béton par rapport aux caractéristiques recherchées.

Il est à noter que les fibres peuvent être ajoutées au liant ou au mélange selon l'invention.

La composition hydraulique selon l'invention peut être préparée en gâchant le mélange selon l'invention ou le liant hydraulique selon l'invention avec de l'eau.

Selon un mode de réalisation avantageux du procédé de préparation d'une composition hydraulique selon l'invention, la quantité d'eau utilisée est de 160 à 195 l/m³ et de préférence de 160 à 185 l/m³.

La composition hydraulique peut être renforcée, par exemple par des armatures métalliques.

La composition hydraulique peut être précontrainte, par des câbles ou des tendons adhérents, ou post-tendu, par des câbles ou des tendons ou des gaines ou des barres non adhérents. La précontrainte, sous la forme de pré-tension ou post-tension, est particulièrement adaptée aux compositions fabriquées selon la présente invention.

Avantageusement, les compositions hydrauliques obtenues selon l'invention présentent une résistance à la compression supérieure ou égale à 90 MPa à 28 jours après le gâchage et/ou supérieure ou égale à 120 MPa après traitement thermique, par exemple après un traitement thermique de 2 jours à 90°C, réalisé après 2 jours à 20°C.

La composition hydraulique selon l'invention peut être préparée selon des procédés connus de l'homme du métier, comprenant le mélange des composants solides et de l'eau, la mise en forme (par exemple, coulage, projection, pulvérisation ou calandrage) et durcissement.

La composition hydraulique selon l'invention peut être soumise à un traitement thermique après la prise pour améliorer ses propriétés mécaniques. Le traitement après prise, appelé également la cure thermique du béton, est de façon générale réalisé à une température de 60°C à 90°C. La température du traitement thermique doit être inférieure à la température d'ébullition de l'eau à la pression ambiante. La température du traitement thermique après prise est généralement inférieure à 100°C.

La durée du traitement thermique après prise peut être, par exemple, de 6 heures à 4 jours, de préférence d'environ 2 jours. Le traitement thermique peut commencer, de façon générale au moins un jour après le début de la prise et de préférence sur du béton âgé de 1 à 12 jours à 20°C.

Le traitement thermique peut être réalisé dans des environnements secs ou humides ou selon des cycles qui alternent les deux environnements, par exemple, un traitement de 24 heures dans un environnement humide suivi d'un traitement de 24 heures dans un environnement sec.

L'invention se rapporte également à un objet mis en forme pour le domaine de la construction comprenant le liant hydraulique selon l'invention ou le mélange selon l'invention.

Les méthodes de mesures suivantes ont été utilisées :

### Méthode de granulométrie laser

Les courbes granulométriques des différentes poudres sont obtenues à partir d'un granulomètre laser Malvern MS2000. La mesure s'effectue dans un milieu approprié (par exemple, en milieu aqueux) ; la taille des particules doit être comprise de 0,02 µm à 2 mm. La source lumineuse est constituée par un laser rouge He-Ne (632 nm) et une diode bleue (466 nm). Le modèle optique est celui de Fraunhofer, la matrice de calcul est de type polydisperse.

Une mesure de bruit de fond est d'abord effectuée avec une vitesse de pompe de 2000 tr/min, une vitesse d'agitateur de 800 tr/min et une mesure du bruit sur 10 s, en l'absence d'ultrasons. On vérifie alors que l'intensité lumineuse du laser est au moins égale à 80%, et que l'on obtient une courbe exponentielle décroissante pour le bruit de fond. Si ce n'est pas le cas, les lentilles de la cellule doivent être nettoyées.

On effectue ensuite une première mesure sur l'échantillon avec les paramètres suivants : vitesse de pompe de 2000 tr/min, vitesse d'agitateur de 800 tr/min, absence d'ultrasons, limite d'obscuration entre 10 et 20 %. L'échantillon est introduit pour avoir une obscuration légèrement supérieure à 10 %. Après stabilisation de l'obscuration, la mesure est effectuée avec une durée entre l'immersion et la mesure fixée à 10 s. La durée de mesure est de 30 s (30000 images de diffraction analysées). Dans le granulogramme obtenu, il faut tenir compte du fait qu'une partie de la population de la poudre peut être agglomérée.

On effectue ensuite une seconde mesure (sans vidanger la cuve) avec des ultrasons. La vitesse de pompe est portée à 2500 tr/min, l'agitation à 1000 tr/min, les ultrasons sont émis à 100 % (30 watts). Ce régime est maintenu pendant 3 minutes, puis on revient aux paramètres initiaux : vitesse de pompe de 2000 tr/min, vitesse d'agitateur de 800 tr/min, absence d'ultrasons. Au bout de 10 s (pour évacuer les bulles d'air éventuelles), on effectue une mesure de 30 s (30000 images analysées). Cette seconde mesure correspond à une poudre désagglomérée par dispersion ultrasonique.

Chaque mesure est répétée au moins deux fois pour vérifier la stabilité du résultat. L'appareil est étalonné avant chaque séance de travail au moyen d'un échantillon standard (silice C10 Sifraco) dont la courbe granulométrique est connue. Toutes les mesures présentées dans la description et les gammes annoncées correspondent aux valeurs obtenues avec ultrasons.

### Méthode de mesure de la surface spécifique BET

La surface spécifique des différentes poudres est mesurée comme suit. On prélève un échantillon de poudre de masse suivante : 0,1 à 0,2 g pour une surface spécifique estimée à plus de 30 m²/g ; 0,3 g pour une surface spécifique estimée à 10-30 m²/g ; 1 g pour une surface spécifique estimée à 3-10 m²/g ; 1,5 g pour une surface spécifique estimée à 2-3 m²/g ; 2 g pour une surface spécifique estimée à 1.5-2 m²/g ; 3 g pour une surface spécifique estimée à 1-1,5 m²/g.

On utilise une cellule de 3 cm³ ou de 9 cm³ selon le volume de l'échantillon. On pèse l'ensemble de la cellule de mesure (cellule + tige en verre). Puis on ajoute l'échantillon dans la cellule : le produit ne doit pas être à moins d'un millimètre du haut de l'étranglement de la cellule. On pèse l'ensemble (cellule + tige en verre + échantillon). On met en place la cellule de mesure sur un poste de dégazage et on dégaze l'échantillon. Les paramètres de dégazage sont de 30 min / 45°C pour le ciment Portland, le gypse, les pouzzolanes ; de 3 h / 200°C pour les laitiers, cendres volantes, ciment alumineux, calcaire ; et de 4 h / 300°C pour l'alumine de contrôle. La cellule est rapidement bouchée avec un bouchon après le dégazage. On pèse l'ensemble et on note le résultat. Toutes les pesées sont effectuées sans le bouchon, celui-ci étant temporairement retiré pour faire la mesure. La masse de l'échantillon est obtenue par soustraction de la masse de la cellule à la somme des masses de la cellule et de l'échantillon dégazé.

On effectue ensuite l'analyse de l'échantillon après l'avoir mis en place sur le poste de mesure. L'analyseur est le SA 3100 de Beckman Coulter. La mesure repose sur l'adsorption d'azote par l'échantillon à une température donnée, ici la température de l'azote liquide soit environ -196°C. L'appareil mesure la pression de la cellule de référence dans laquelle l'adsorbat est à sa pression de vapeur saturante et celle de la cellule de l'échantillon dans laquelle des volumes connus d'adsorbat sont injectés. La courbe résultant de ces mesures est l'isotherme d'adsorption. Dans le processus de mesure, la connaissance du volume mort de la cellule est nécessaire : une mesure de ce volume est donc réalisée avec de l'hélium avant l'analyse.

La masse de l'échantillon calculée précédemment est entrée en tant que paramètre. La surface BET est déterminée par le logiciel par régression linéaire à partir de la courbe expérimentale. L'écart-type de reproductibilité obtenu à partir de 10 mesures sur une silice de surface spécifique 21,4 m²/g est de 0,07. L'écart-type de reproductibilité obtenu à partir de 10 mesures sur un ciment de surface spécifique 0,9 m²/g est de 0,02. Une fois toutes les deux semaines un contrôle est effectué sur un produit de référence. Deux fois par an, un contrôle est réalisé avec l'alumine de référence fournie par le constructeur.

### Méthode de mesure de la résistance de compression

Quelle que soit l'échéance, la résistance de compression est mesurée sur un échantillon cylindrique ayant un diamètre de 7 cm et une hauteur de 14 cm, les surfaces sur lesquelles la force de compression est appliquée à l'échantillon sont aplanies.

La force de compression appliquée est augmentée à un taux de 3,85 kN/sec durant le test de compression.

### Exemples

La présente invention est décrite par les exemples A,B,C,D,E,F,G,H qui suivent, non limitatifs.
• Matières premières:

| | |
|---|---|
| ✔ Ciment 52,5N PMES Le Teil | Lafarge France |
| ✔ Millisil C6 | Sibelco, France |
| ✔ Fumée de silice MST02 Le Pontet | SEPR, France |
| ✔ Anhydrite Micro A | Maxit, France |
| ✔ Sable BE01 | Sibelco, France |
| ✔ Superplastifiant F2 | Chryso, France |

Le ciment a été préparé par broyage et séparation du ciment Portland CEM I 52.5N PMES, provenant de la cimenterie Lafarge Le Teil. Ce broyage a été réalisé en utilisant un broyeur à jet d'air associé à un séparateur à très haute efficacité. Le ciment broyé obtenu avait un D10 de 1,7 µm, un D50 de 5,3 µm, et un D90 de 10,6 µm. Sa surface Blaine est de 6950cm²/g et sa surface BET est de 1,65m²/g.

Le Millisil C6 est un filler siliceux (quartz) provenant de la société Sibelco. Il correspond à l'addition A1. Il a un D10 de 2,9 µm, un D50 de 28,9 µm, et un D90 de 95,6 µm.

La fumée de silice MST 02 provenant de la société SEPR se caractérise par une surface BET de 12 m²/g.

L'anhydrite Micro A est un sulfate de calcium anhydre micronisé provenant de la société Maxit. Elle a un D10 de 1,6 µm, un D50 de 12,3 µm, et un D90 de 17,0 µm.

Le sable BE01 est un sable siliceux provenant de la société Sibelco. Il a un D10 d'environ 210 µm et un D50 d'environ 310 µm, un D90 d'environ 400 µm.

Le superplastifiant F2 est un superplastifiant de nouvelle génération à base de polycarboxylate modifié.

### Matériels :

- un malaxeur pétrin RAYNERI R601, qui a été fourni par la société VMI avec une cuve de 10 litres. Ce malaxeur exerce un mouvement de rotation planétaire ;
- des moules cylindriques en carton de diamètre 7 cm et de hauteur 14 cm ;
- une enceinte climatique à 95-100% d'hygrométrie relative et 90°C +/-1 °C fournie par la société Verre Labo Mula ;
- une chambre humide à 95-100% d'hygrométrie relative et 20 +/-1 °C

### Protocole de préparation de la composition hydraulique selon l'invention:

Le béton (composition hydraulique) a été fabriqué selon le protocole décrit ci-après :
1) introduction des matières sèches (sable, A1, ciment, sulfate de calcium et fumée de silice) dans le bol du malaxeur Rayneri ;
2) malaxage pendant 3 minutes à la vitesse de 15 tours par minute, pour homogénéiser les matières sèches ;
3) introduction de l'eau de gâchage et de la moitié du superplastifiant pendant 30 secondes, à la vitesse de rotation de 35 tours par minute;
4) malaxage pendant 4 minutes et 30 secondes à la vitesse de 35 tours par minute;
5) introduction de l'autre moitié du superplastifiant pendant 30 secondes, à la vitesse de rotation de 50 tours par minute;
6) malaxage pendant 2 minutes et 30 secondes à la vitesse de 50 tours par minute ;
7) arrêt du malaxeur.

Un béton frais a été obtenu. Le béton a été coulé dans les moules cylindriques. Les éprouvettes moulées obtenues sont fermées hermétiquement et mises en attente pendant 24 heures à 20°C. Ensuite, les éprouvettes sont démoulées et sont placées soit :
- en chambre humide pendant 28 jours à 20°C et 100% d'humidité relative ; soit
- en chambre humide pendant 7 jours à 20°C et 100% d'humidité relative, puis en enceinte climatique pendant 48h à 90° C et 100% d'humidité relative (traitement thermique).

Puis les résistances mécaniques ont été mesurées.
• Liants hydrauliques selon l'invention, en % massiques :

| | **% Ciment** | **% A1** | **% Fumée de Silice** | **% sulfate de calcium** |
|---|---|---|---|---|
| **A** | 18,2% | 40,7% | 40,3% | 0,8% |
| **B** | 42,0% | 37,5% | 18,6% | 1,9% |
| **C** | 17,7% | 61,9% | 19,6% | 0,8% |
| **D** | 48,7% | 43,1% | 6,0% | 2,2% |
| **E** | 25,6% | 66,9% | 6,3% | 1,2% |
| **F** | 26,3% | 46,6% | 25,9% | 1,2% |
| **G** | 33,9% | 52,1% | 12,5% | 1,5% |
| **H** | 34,0% | 48,0% | 16,5% | 1,5% |

• Composition des mélanges selon l'invention, en % volumiques :

| | **% Liant Hydraulique** | **% Sable** |
|---|---|---|
| **A** | 50,8% | 49,2% |
| **B** | 51,0% | 49,0% |
| **C** | 50,8% | 49,2% |
| **D** | 51,1% | 48,9% |
| **E** | 50,8% | 49,2% |
| **F** | 50,8% | 49,2% |
| **G** | 50,9% | 49,1% |
| **H** | 50,9% | 49,1% |

• Compositions hydrauliques selon l'invention, en litres pour 1 m³ de béton :
Les compositions hydrauliques selon l'invention sont décrites ci-après en litres /m³ de Béton, hors air occlus et hors fibres.

| | **Mélange** | **Adjuvant** | **Eau Ajoutée** | **Eau Totale** |
|---|---|---|---|---|
| **A** | 828,9 | 18,7 | 152,4 | 166,8 |
| **B** | 821,6 | 12,2 | 166,2 | 175,5 |
| **C** | 833,0 | 12,2 | 154,8 | 164,2 |
| **D** | 804,1 | 10,3 | 185,6 | 193,5 |
| **E** | 808,2 | 9,4 | 182,4 | 189,6 |
| **F** | 832,0 | 13,1 | 154,9 | 165,0 |
| **G** | 832,0 | 11,2 | 156,8 | 165,5 |
| **H** | 829,8 | 11,7 | 158,5 | 167,5 |

• Performances des compositions hydrauliques :
Les résistances mécaniques en compression sont mesurées sur cylindre de diamètre 70mm et de hauteur 140mm. Les résultats sont exprimés en MPa.

| | **Rc 28jours/20°C** | **Rc Traitement thermique** |
|---|---|---|
| **A** | 135,6 | 199,4 |
| **B** | 187,2 | 239,1 |
| **C** | 134,8 | 196,2 |
| **D** | 164,9 | 202,4 |
| **E** | 128,9 | 169,1 |
| **F** | 154,9 | 219 |
| **G** | 181,4 | 225,2 |
| **H** | 176 | 235,7 |

## Revendications

1. Liant hydraulique comprenant en pourcentage en masse :
- de 17 à 55 % d'un ciment Portland dont les particules présentent un D50 compris de 2 µm à 11 µm ;
- au moins 5% de fumée de silice ;
- de 36 à 70% d'une addition minérale A1 dont les particules présentent un D50 compris de 15 à 150 µm ;
la somme de ces pourcentages étant comprise de 80 à 100% ;
la somme des pourcentages de ciment et de fumée de silice étant supérieure à 28% ;
l'addition minérale A1 étant choisie parmi les laitiers, les additions pouzzolaniques ou les additions siliceuses tel que le quartz, les additions minérales silico-calcaire, les additions calcaire telles que le carbonate de calcium ou leurs mélanges.

2. Liant hydraulique selon la revendication 1 **caractérisé en ce que** le ciment est un ciment CEM I.

3. Liant hydraulique selon la revendication 1 ou 2 **caractérisé en ce qu'**il comprend en outre du sulfate de calcium.

4. Liant hydraulique selon l'une quelconque des revendications précédentes **caractérisé en ce que** les particules du ciment présentent un D90 compris de 8 µm à 25 µm.

5. Mélange comprenant en pourcentage en volume, au moins 45 % du liant hydraulique selon l'une quelconque des revendications 1 à 4 et au moins 30 % de sable, la somme de ces pourcentages étant comprise de 95 à 100%.

6. Mélange selon la revendication 5 **caractérisé en ce qu'**il comprend en outre un sable dont les particules présentent un D10 compris de 100 µm à 1 mm et un D50 compris de 200 µm à 3 mm et un D90 de 300 µm à 5 mm.

7. Mélange selon la revendication 5 ou 6 **caractérisé en ce que** le sable est un sable siliceux, un sable de bauxite calcinée, un sable silico-calcaire, un sable calcaire ou leurs mélanges.

8. Composition hydraulique comprenant dans un volume de 1 m³ hors air occlus et hors fibres
- de 155 à 205 litres d'eau;
- au moins 770 litres de mélange selon l'une des revendications 5 à 7;
la somme des volumes de ces 2 composants étant comprise de 950 à 1000 litres.

9. Composition hydraulique selon la revendication 8 comprenant un agent anti-mousse.

10. Composition hydraulique selon l'une quelconque des revendications 8 à 9 **caractérisé en ce qu'**elle comprend en outre des fibres minérales, organiques ou métalliques ou un mélange de celles-ci.

11. Objet mis en forme pour le domaine de la construction comprenant le liant hydraulique selon l'une quelconque des revendications 1 à 4 ou le mélange selon l'une quelconque des revendications 5 à 7.

## Patentansprüche

1. Hydraulisches Bindemittel, umfassend, in Massenprozentanteil:
- 17 bis 55 % eines Portland-Zements, dessen Partikel einen D50 im Bereich von 2 µm bis 11 µm aufweisen;
- mindestens 5 % Silikastaub;
- 36 bis 70 % eines mineralischen Zusatzstoffs A1, dessen Partikel einen D50 im Bereich von 15 bis 150 µm aufweisen;
wobei die Summe dieser Prozentanteile im Bereich von 80 bis 100 % beträgt;
wobei die Summe der Zement- und Silikastaub-Prozentanteile mehr als 28 % beträgt;
wobei der mineralische Zusatzstoff A1 ausgewählt ist aus den Schlacken, den puzzolanischen Zusatzstoffen oder den kieselsäurehaltigen Zusatzstoffen wie Quarz, den kieselsäure-kalkhaltigen mineralischen Zusatzstoffen, den kalkhaltigen Zusatzstoffen wie Calciumcarbonat, oder deren Mischungen.

2. Hydraulisches Bindemittel nach Anspruch 1, **dadurch gekennzeichnet, dass** der Zement ein CEM I-Zement ist.

3. Hydraulisches Bindemittel nach Anspruch 1 oder 2, **dadurch gekennzeichnet, dass** es weiter Calciumsulfat umfasst.

4. Hydraulisches Bindemittel nach einem der vorstehenden Ansprüche, **dadurch gekennzeichnet, dass** die Partikel des Zements einen D90 im Bereich von 8 µm bis 25 µm aufweisen.

5. Mischung, die in Volumenprozentanteil mindestens 45 % des hydraulischen Bindemittels nach einem der Ansprüche 1 bis 4 und mindestens 30 % Sand umfasst, wobei die Summe dieser Prozentanteile im Bereich von 95 bis 100 % beträgt.

6. Mischung nach Anspruch 5, **dadurch gekennzeichnet, dass** sie weiter einen Sand umfasst, dessen Partikel einen D10 im Bereich von 100 µm bis 1 mm, und einen D50 im Bereich von 200 µm bis 3 mm, und einen D90 von 300 µm bis 5 mm aufweisen.

7. Mischung nach Anspruch 5 oder 6, **dadurch gekennzeichnet, dass** der Sand ein kieselsäurehaltiger Sand, ein kalzinierter Bauxitsand, ein kieselsäurekalkhaltiger Sand, ein kalkhaltiger Sand oder deren Mischungen ist.

8. Hydraulische Zusammensetzung, die in einem Volumen von 1 m³ ohne eingeschlossene Luft und ohne Fasern umfasst
- 155 bis 205 Liter Wasser;
- mindestens 770 Liter Mischung nach einem der Ansprüche 5 bis 7;
wobei die Summe der Volumen dieser 2 Komponenten im Bereich von 950 bis 1000 Liter beträgt.

9. Hydraulische Zusammensetzung nach Anspruch 8, die ein Antischaummittel umfasst.

10. Hydraulische Zusammensetzung nach einem der Ansprüche 8 bis 9, **dadurch gekennzeichnet, dass** sie weiter mineralische, organische oder metallische Fasern oder eine Mischung derselben umfasst.

11. Geformter Gegenstand für den Bereich des Bauwesens, der das hydraulische Bindemittel nach einem der Ansprüche 1 bis 4 oder die Mischung nach einem der Ansprüche 5 bis 7 umfasst.

## Claims

1. Hydraulic binder comprising, as percentage by mass:
- from 17 to 55% of a Portland cement, the particles whereof have a D50 that lies in the range 2 µm to 11 µm;
- at least 5% of silica fume;
- from 36 to 70% of a mineral addition A1, the particles whereof have a D50 that lies in the range 15 to 150 µm;
the sum of these percentages lying in the range 80 to 100%;
the sum of the percentages of cement and of silica fume being greater than 28%;
the mineral addition A1 being selected from slags, pozzolanic additions or siliceous additions such as quartz, silico-calcareous mineral additions, calcareous additions such as calcium carbonate or mixtures thereof.

2. Hydraulic binder according to claim 1, **characterised in that** the cement is a CEM I cement.

3. Hydraulic binder according to either claim 1 or claim 2, **characterised in that** it further comprises calcium sulphate.

4. Hydraulic binder according to any of the preceding claims, **characterised in that** the cement particles have a D90 that lies in the range 8 µm to 25 µm.

5. Mixture comprising as percentage by volume, at least 45% hydraulic binder according to any of claims 1 to 4, and at least 30% sand, the sum of these percentages lying in the range 95 to 100%.

6. Mixture according to claim 5, **characterised in that** it further comprises a sand, the particles whereof have a D10 that lies in the range 100 µm to 1 mm and a D50 that lies in the range 200 µm to 3 mm and a D90 that lies in the range 300 µm to 5 mm.

7. Mixture according to either claim 5 or claim 6, **characterised in that** the sand is a siliceous sand, a calcined bauxite sand, a silico-calcareous sand, a calcareous sand or mixtures thereof.

8. Hydraulic composition comprising, in a volume of 1 m³ excluding entrained air and excluding fibres
- from 155 to 205 litres of water;
- at least 770 litres of mixture according to any of claims 5 to 7; the sum of the volumes of these 2 components lying in the range 950 to 1,000 litres.

9. Hydraulic composition according to claim 8, comprising an anti-foaming agent.

10. Hydraulic composition according to any of claims 8 to 9, **characterised in that** it further comprises mineral, organic or metal fibres, or a mixture thereof.

11. Object formed for the construction field comprising the hydraulic binder according to any of claims 1 to 4 or the mixture according to any of claims 5 to 7.
